# EUROPEAN PATENT SPECIFICATION

(11) **EP 3 394 916 B1**
(45) Date of publication and mention of the grant of the patent: **02.10.2019**
(21) Application number: 16819521.2
(22) Date of filing: 19.12.2016
(51) Int. Cl.: H01M 2/12, H01M 10/12, H01M 2/08, F16B 41/00

(54) **VENT PLUG FOR LEAD ACID BATTERIES**
LÜFTUNGSSTOPFEN FÜR BLEISÄUREBATTERIEN
BOUCHON D'AÉRATION POUR BATTERIES AU PLOMB

(30) Priority: 23.12.2015 LU 92927
(43) Date of publication of application: 31.10.2018
(73) Proprietor: Accumalux, 1899 Kockelscheuer (LU)
(72) Inventor: FLAMENT, Michel, 5770 Weiler-la-Tour (LU); NOTHAR, Felix, 8190 Kopstal (LU)
(74) Representative: Office Freylinger
(86) International application number: PCT/EP2016/081648
(87) International publication number: WO 2017/108650

(56) References cited:
- JP-Y1- S5 013 214
- US-A- 2 631 182
- US-A- 3 907 605
- US-A- 3 977 908
- US-A- 5 879 119

## Description

### Technical field

The present invention relates to a cover for lead acid battery and lead-acid batteries comprising such a cover as well as to vent plugs for the individual cells themselves, in particular the invention relates to lead acid batteries having a cover with a vent plug. The invention also relates to a process for manufacturing said lead acid batteries.

The invention is extendable to all screwed plug applications in sealed batteries in either vehicles or stand-by power systems.

### Background Art

An electric storage battery such as a lead acid storage battery typically comprises a battery case with a rectangular open top case having a plurality of intercell partition walls. A plurality of battery plates are respectively received between the plurality of intercell partition walls for forming a plurality of battery cells. The plurality of battery plates between the plurality of partition intercell walls are interconnected by intercell connectors extending through the intercell partition walls. The intercell connectors connect the plurality of battery plates between the plurality of partition intercell walls in an electrical series configuration.

A positive and negative battery post extends upwardly from the battery plates disposed in the battery cells at opposed ends of the battery case for providing a positive pole at one end of the battery case and a negative pole on the other end of the battery case. The positive and negative battery posts extend above the level of the battery case.

Lead-acid cells and batteries include sulphuric acid as an electrolyte. The sulfuric acid is filed into each battery cell through the filling hole in the cover. The filing hole is then closed.

The sulfuric acid is a very corrosive acid and it must therefore be made sure that no sulfuric acid can escape or be spilled from the battery cells. Because sulphuric acid has a very low surface tension, it can readily pass through small orifices and cracks. The battery cells must therefore be closed tightly and firmly.

Traditionally, the filling holes of the batteries are closed by push vent plugs or by screw vent plugs. An opening of these vent plugs brings a serious risk of injury to persons through spilling of the contained hazardous substances or causes a significant reduction of the life cycle of the battery. For this purpose in order to prevent the opening of the filling holes, the vent plugs are ultrasonic or friction welded or clipped or screwed and sealed additionally by a label afterwards.

It is also known to close the holes of the battery cells by welded or clipped vent plugs that cannot be opened without damaging the surface of the vent plugs or the surface of the lid.

State of the art is that the geometry of the head of the screwed vent plug foresees an interlock for the screwdriver automat. Most common screw drive types are the slotted types or the one way type.

The geometry of the vent plug head where an interlock is foreseen strongly facilitates the opening of the vent plugs by non-authorized persons due to common available screw-drivers or tools which can be used for the transmission of the untightening torque.

When applying an interlock screw drive system the risk of injury to persons is at the highest level due to the possibility for unscrewing the vent plugs and spilling the hazardous substances out of the battery by the simple application of conventional tools used for the positive-locking.

When applying an interlock screw drive systems the vent plugs can be opened without damaging the surface of the vent plug or the surface of the lid. An opening of the battery can still strongly affect the functionality of the battery.

For safety reasons and in order to maintain the functionality of the battery, the filling holes of the battery cells can be closed by a ramp which is non-detachably connected to the battery cover or to the battery container by clipping or welding. The ramp can thus not be opened except by the authorized person for later recycling purposes. Due to their permanent joint with the battery cover or battery container, such ramps cannot be opened without damaging the battery.

It is also state of the art, for safety reasons and also in order to maintain the battery functionality to weld or clip a secondary lid over the primary lid which closes the battery. The main function of the secondary lid is to prohibit the access to the vent plugs respectively to the filling holes of the battery cells, which are part of the design of the primary lid.

JP S50 13214 Y1 discloses a reserve battery which does not need to be charged before it is put into use. It is necessary to keep the battery case airtight and liquid tight so that the cathode plate of the battery does not oxidize during storage. In order to achieve to close the vent plug in an air and liquid tight manner, a thin film is fixed as a sealing around the stopper (i.e. the vent plug). This film is fixed onto the cover / vent plug after the vent plug is inserted into the cover of the battery in a conventional way.

US 2,631,182 describes an indicating vent plug having a body with a tubular extension passing downwardly therefrom to and below normal electrolyte level in a storage battery cell, a short focal length lens intermediate the ends of said tubular extension, and a floating member located in said tubular extension below said lens, said lens being so positioned that the electrolyte at normal level will float said floating member into substantial contact with the surface of said lens, whereby said member becomes visible therethrough.

The vent plugs should be tamperproof so that they cannot be opened unnoticed.

A principal drawback in the use of the known methods is that they require special tools or further steps which are difficult to integrate in existing production lines.

### Technical problem

It is an object of the present invention to provide a vent plug for a cover of a lead acid battery, which allows to close the battery cells in a tamperproof way, which needs no additional production steps on a standard battery assembly line.

### General Description of the Invention

To achieve this object, the present invention proposes a process for sealing a lead acid battery using a vent plug for a filling hole in a cover for a lead acid battery,
- wherein said vent plug has an annular body with a head portion and a body portion,
- wherein said body portion has a thread and a sealing ring on an outer surface of the body portion for mechanically engaging the vent plug into the filling hole in the cover by rotation of the plug using torque
- wherein the head portion of the vent plug has no interlock possibility in which a tool could be engaged mechanically and
- wherein the torque required to insert the vent plug in the cover is transmitted between a tool and the vent plug by friction only.

Furthermore the invention proposes a cover for a lead acid battery comprising at least a filling hole and at least one tamperproof vent plug,
- wherein said vent plug has an annular body with a head portion and a body portion,
- wherein said body portion has a thread and a sealing ring on an outer surface of the body portion for mechanically engaging the vent plug into the filling hole in the cover by rotation using torque
- has no interlock possibility in which a tool could be engaged mechanically and
- wherein the torque required to insert the vent plug in the cover is transmitted between a tool and the vent plug by friction only.
- wherein the head portion of the vent plug has a surface to screw or unscrew the vent plug by friction only.

A vent plug for a filling hole in a cover made of plastic material for a lead acid battery is described, said vent plug having an annular body with a head portion and a body portion, said body portion having a thread and a sealing ring on an outer surface of the body portion for mechanically engaging the vent plug in the filling hole in the cover, wherein head portion of the vent plug has a smooth surface.

The word smooth is to be understood as a surface without any interlock possibility like projections, ridges, creases, corrugations, folds, slits, notches, cut outs etc in which a tool like a screw driver, nut driver or the like could be engaged mechanically to screw or unscrew the vent plug. In other words the vent plug comprises no interlock adaptation system for a screwing / unscrewing device. There is thus an absence, of any projections, depressions or the like on all surfaces of the plug head that could be accessed when the plug is tightened / inserted in the battery cover and that could be used to engage with a tool in any other way than by friction only.

The device for mechanically engaging the vent plug in the filling hole is preferably situated on the outer surface of the body portion of the vent plug.

The cooperative feature of the mechanically engaging portion is threaded or otherwise adapted so that the insertion and mechanical engagement as well as removal of the plug require rotation of the plug.

The torque required to screw the vent plug into the filing hole of the cover is equal or smaller than the torque required to unscrew the vent plug from the filing hole. It is not possible to unscrew the vent plug without the same appliance that was used to screw the vent plug into the filling hole of the cover without damaging the cover or the vent plug.

The vent plug is screwed in the filling hole with a predetermined torque and a predetermined speed so that the momentum is enough to engage the vent plug in the filing hole just a little i.e. so much that the vent plug cannot be unscrewed without damaging it. The vent plug is inserted into the filing hole with a certain velocity so that it is "squeezed in" the filing hole.

The top surface of the plug is configured to enable the transfer by friction of the required tightening torque.

This invention may be thus applied to any vent plug having a flat - level - smooth head portion respectively top surface and/or any plug without any adaptation system for a screwing / unscrewing system composed of one or more different components in any geometric form on the surface of the plug. The dimensions, geometry and materials used with regard to vent plugs may vary widely. The present vent plugs may be used in any screwed vent plug application in sealed batteries in vehicles or in stand-by power systems.

The advantage of this kind of vent plug is that tamperproof batteries may be produced on a conventional battery assembly line. The cells of said batteries however cannot be reopened once the vent plugs are placed without visible damage of the plug and/or the cover. It is thus the first time that such "maintenance free" batteries can be produced using a standard cover and without any modification on the production lines. There is provided a technical solution which allows to screw a flat / smooth vent plug into a filing hole of a standard battery cover using a predefined torque. Once the vent plug is screwed into the cover, it becomes impossible to unscrew the plug without damaging and/or destroying the plug and/or the cover.

The device for mechanically engaging the vent plug in the filing hole comprises a thread and a sealing ring on said outer surface of the body portion of the vent plug..

In a preferred embodiment, the head portion of the vent plug comprises a top surface with a roughness between Ra=0.1 and Ra=30 µm. The roughness of the top surface is enough to allow the vent plug to be screwed into the filing hole and obtain enough momentum to deform the sealing ring.

The top surface of the head portion of the vent plug is either made of the same material as the vent plug or the top surface is fully or partially covered by a material which is different from the material of the vent plug material.

The top surface of the head portion of the vent plug is covered by at least two different materials.

The vent plug is made of a thermoplastic material like polypropylene, the sealing ring is made of thermoplastic elastomer or rubber.

According to a further aspect, the invention also concerns a lead acid battery as well as a cover for a lead acid battery comprising at least one vent plug as described above.

According to a further aspect, the invention also concerns a process for sealing a lead acid battery using a vent plug as described above.

The vent plugs described herein may be used in conventional production lines only by adapting the screwing head. The torque that is required to screw the vent plug into the filing hole of the battery cover is transmitted from the tool to the vent plug by friction only. Since the transmission of the tightening torque is obtained by friction only, the finishing of the surfaces respectively the material types of the top surface of the plug is important.

It has been found that the applied torque should range between 100 N*cm to 250 N*cm and is applied by friction in comparison to the conventional positive-locking. The applied axial force on the top of the plug should range from: 150 to 350 N with preferred rotational speeds of between 550 to 650 RPM.

The screwing head comprises preferably a rubber surface or a roughened steel surface.

In case the top of the vent plug comprises a rubber surface, the screwing head consists preferably of a roughened steel surface. The roughened steel surface should preferably mate dimensionally with the rubber surface on the top of the plug. The roughness of the steel surface may vary between Ra=0.1 µm and Ra=30 µm. Such a roughness will provide enough grip to transmit the required forces to insert the plug.

In case the top of the vent plug is made of of a thermoplastic polymer, the screwing head either comprises a rubber surface or a roughened steel surface.

The final selection of the type of screwing head depends on the application environment. Indeed, a "roughened" flat vent plug can be processed with a rubber screwing tool when the vent plug screwing machines are located in a dry environment with no risk of contamination with acid between the plug and the screwing tool.

If the surface of the plug and/or the screwing tool is contaminated with acid, this acid is acting as lubricating agent and is thus significantly reducing the friction coefficient between the vent plug and the screwing head. It has been found that the friction coefficient between the vent plug and the screwing head is reduced by a factor of 3 to 10 when their interface is contaminated with battery acid. This reduction depends on the type of plug in combination with the type of screwing head.

In order to apply the required torque from the screwing head to the vent plug, the following physical effects take place when there is a layer of acid between the plug and the screwing head:
- Part of the layer of acid is pressed out of the interface between the top of the plug and the screwing head due to the applied pressure
- A layer of acid is pressed between the asperities on either the screwing tool or the top of the plug. The asperities are related to the roughness of the tool or on the top of the plug. The volume of acid is determined by the sum of free volumes resulting from the rough surface(s).
- An increase of roughness of either the screwing tool or the top of the vent plug increases the contact surface between the vent plug and the screwing tool. The increase of the contact surface in combination with a steel screwing head and a soft rubber material on the vent plug increases the friction and thus the torque that can be transmitted.

When the vent plug is inserted into the filing hole, the sealing ring is deformed and the vent plug closes the filing hole tightly .The deflected rubber sealing ring in the screwed in position is working as an additional unscrewing safety due to:
- Deflection of the sealing which needs to be surmounted
- Frictional connection between the plug and the lid.

In a preferred embodiment, the head portion of the vent plug comprises a top surface with a roughness between Ra=0.1 µm and Ra=30 µm. The roughness of the top surface is enough to allow the vent plug to be screwed into the filing hole and obtain enough momentum to deform the sealing ring.

### Brief Description of the Drawings

A preferred embodiment of the invention will now be described, by way of example, with reference to the accompanying drawings in which:
Fig. 1: is a perspective view (side elevation view) of a battery cover using a vent plug illustrative of the present invention,
Fig. 2: is a cross-section view of an illustrative embodiment of a vent plug of the present invention for use in a lead acid battery
Fig. 3: is a partial enlargement of Fig. 2.
Fig. 4 and Fig 5: are perspective views of two different illustrative embodiments of a vent plug of the present invention,
Fig. 6, show a further illustrative embodiment of the top surface of the head portion of a vent plug of the present invention,

Further details and advantages of the present invention will be apparent from the following detailed description.

### Detailed Description of the Drawings

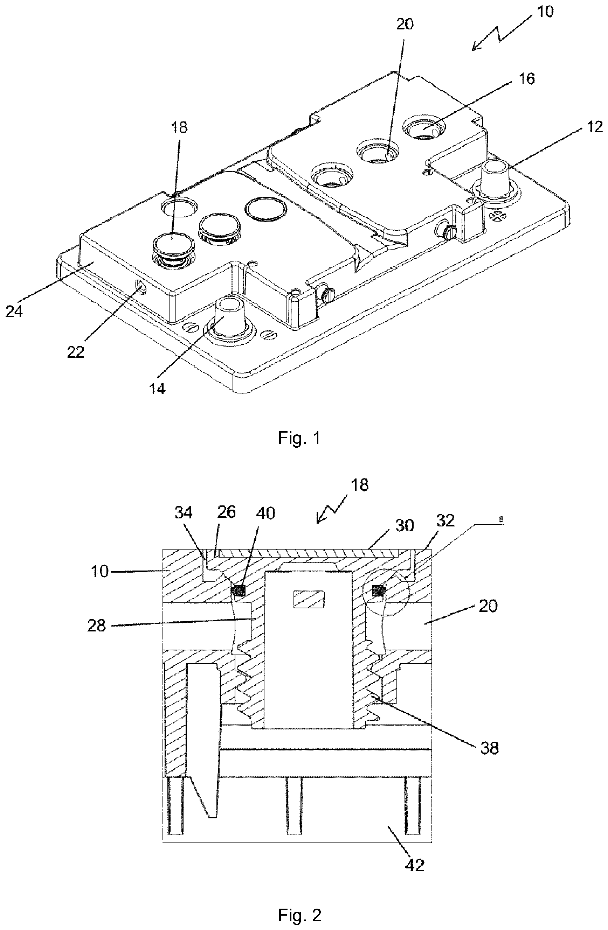

As is shown in FIG. 1, the cover 10 of a lead acid battery comprising a positive and a negative terminal 12, 14 and six filing holes 16. In three of the filing holes, a vent plug 18 is inserted. The filing holes 16 are connected to each other by a venting channel 20 which ends in a venting hole 22 in the sidewall 24 of the cover 10.

Fig. 2 shows a cross-section view of a vent plug 18 fully inserted in a filing hole 16 of the cover 10. The vent plug 18 has a head portion 26 and a body portion 28. When the vent plug 18 is fully inserted in the filing hole 16, the top surface 30 is flush with the top surface 32 of the cover 10 surrounding the filing hole 16. The vent plug and the filing hole are configured such that only a very narrow gap 34 subsists between the filling hole 16 and the head portion 26 of the vent plug 18. Typically the gap between the cover and the vent plug is between 0.2mm and 1 mm. It is thus impossible to insert a tool which could grab/grip/seize the circumferential surface 36 of the head portion of the vent plug to unscrew the vent plug 18 from the cover, because the gap 34 is too narrow. If such an attempt was made, the insertion of a tool into the gap 34 would leave traces on the cover 10 and/or plug 18.

The body portion 28 of the vent plug 18 comprises a device for mechanically engaging the vent plug 18 in the filing hole 20. In this particular embodiment, this device is situated on the outer surface of the body portion 28 of the vent plug 18 and comprises a thread 38 and a sealing ring 40.

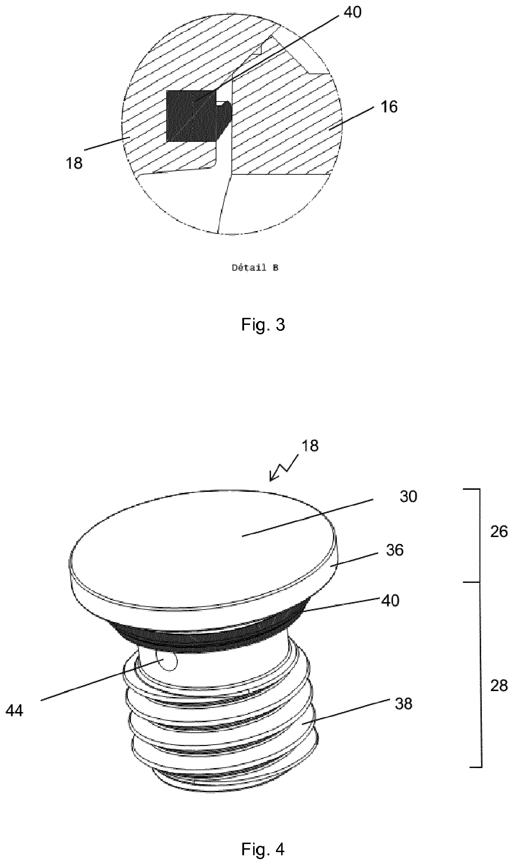

The body portion 28 of the vent plug 18 is hallowed out so that any gases from the battery cell 42 can be evacuated through-holes 44 (cf. Fig. 4) in the sidewall of the body part 28 of the vent plug 18 and the venting channel 20 and the venting hole 22 in the cover 10.

Fig. 3 shows a partial enlargement of Fig. 2. On this figure, it is shown that the sealing ring 40 is deformed slightly as it is pushed against the inside of the filing hole when the vent plug is inserted into the filing hole.

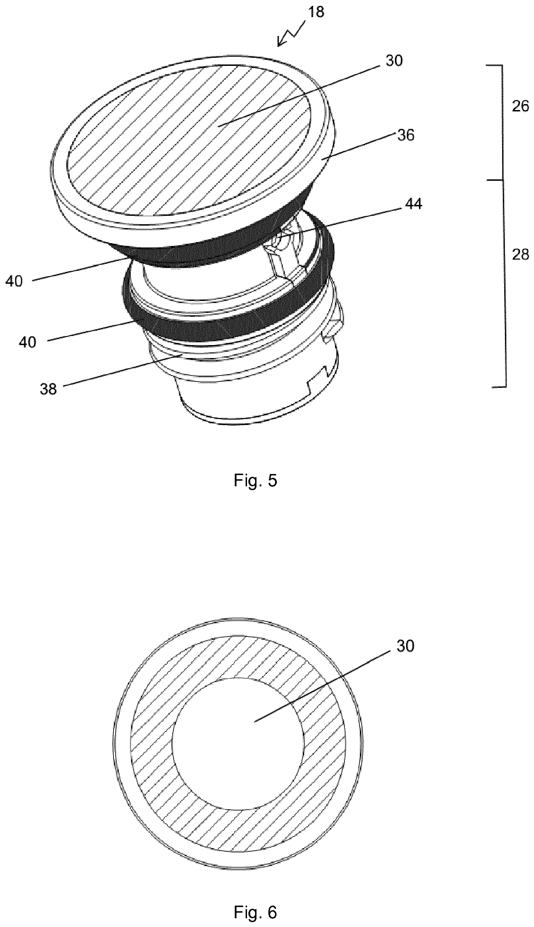

Fig. 4 and Fig 5 are perspective views of two different illustrative embodiments of a vent plug of the present invention.

The two vent plugs differ firstly from the mechanical device on the outer surface of their respective body portions 28 and secondly from their top surface 30 of their respective head portions 26.

As can be seen, the body portion 28 of the vent plug 18 of Fig. 4 comprises a thread 38, one sealing ring 40 and a through-hole 44. Such vent plugs are typically used for SLI-types automotive batteries that power the starter motor, the lights and the ignition system.

The body portion 28 of the vent plug 18 of Fig. 5 comprises a thread 38 and two sealing rings 40, a through-hole 44 between the two sealing rings. Such vent plugs are used for valve-regulated lead-acid batteries.

The vent plugs of Fig. 4 and 5 have different top surfaces on the head portion of the vent plug. The top surface of the vent plug of Fig. 4 is uniform i.e. covered by one material. This material may be the same material as the vent plug i.e. polypropylene or it may be a different material, like rubber, or thermoplastic elastomers (TPE) like styrenic block copolymers (TPE-s), thermoplastic olefins (TPE-o), elastomeric alloys (TPE-v or TPV), thermoplastic polyurethanes (TPU), thermoplastic copolyester, thermoplastic polyamides or mixtures thereof.

The top surface of the vent plug of Fig. 5 has two different zones, an outer zone and an inner zone. These two zones have different surface properties, i.e. one zone may be rougher i.e. provide more grip than the other or may be made of different material which is more tacky than the other material, like rubber or thermoplastic elastomers (TPE).

Fig. 6 shows a further embodiment of the top surface of a vent plug. As can be seen on the Fig. 6, the top surface comprises 3 different, concentric zones with different surface properties each. The different surface properties may be due to different materials or different surface roughness. The surfaces depicted herein are examples only and are applicable for all types of vent plugs independent of the battery type.

**Legend**

| | |
|---|---|
| *10* | *cover* |
| *12* | *positive terminal* |
| *14* | *negative terminal* |
| *16* | *Filling hole* |
| *18* | *Vent plug* |
| *20* | *Venting channel* |
| *22* | *venting hole* |
| *24* | *sidewall* |
| *26* | *head portion* |
| *28* | *body portion* |
| *30* | *top surface of the head portion of the vent plug* |
| *32* | *top surface of the cover* |
| *34* | *gap* |
| *36* | *circumferential surface of the head portion* |
| *38* | *thread* |
| *40* | *Sealing ring* |
| *42* | *battery cell* |
| *44* | *through-holes* |

## Claims

1. A process for sealing a lead acid battery using a vent plug for a filling hole in a cover for a lead acid battery,
• wherein said vent plug has an annular body with a head portion and a body portion,
• wherein said body portion has a thread and a sealing ring on an outer surface of the body portion for mechanically engaging the vent plug into the filling hole in the cover by rotation of the plug using torque
• **characterized in that** the head portion of the vent plug has no interlock possibility in which a tool could be engaged mechanically and
• wherein the torque required to insert the vent plug in the cover is transmitted between a tool and the vent plug by friction only.

2. The process according to claim 1, wherein the torque is in the range between 100 N*cm to 250 N*cm.

3. The process according to claim 1 or 2, wherein an axial force is applied on the top of the vent plug in the range from: 250 to 350 N.

4. The process according to any of the claims 1 to 3, wherein a rotational speed of between 550 to 650 RPM is applied to the vent plug.

5. A cover for a lead acid battery comprising at least a filling hole and at least one tamperproof vent plug,
• wherein said vent plug has an annular body with a head portion and a body portion,
• wherein said body portion has a thread and a sealing ring on an outer surface of the body portion for mechanically engaging the vent plug into the filling hole in the cover by rotation using torque
• **characterized in that** the head portion of the vent plug has no interlock possibility in which a tool could be engaged mechanically and
• wherein the torque required to insert the vent plug in the cover is transmitted between a tool and the vent plug by friction only.
• wherein the head portion of the vent plug has a surface to screw or unscrew the vent plug by friction only.

6. The cover according to claim 5 wherein there is a gap between the cover and the head portion of the vent plug of between 0.25 mm and 1 mm.

7. The cover according to any of the claims 5 to 6 wherein the head portion of the vent plug comprises a top surface which is configured to enable the transfer by friction of the required tightening torque and has a roughness between Ra=0.1 µm and Ra=30 µm.

8. The cover according to any of the claims 5 to 7 wherein the top surface of the head portion of the vent plug is made of the same material as the vent plug.

9. The cover according to any of the claims 5 to 7 wherein the top surface of the vent plug is either fully or partially covered by a material which is different from the material of the vent plug material.

10. The cover according to any of the claims 5 to 7 wherein the top surface of the head portion of the vent plug is covered by at least two different materials.

11. The cover according to any of the claims 5 to 7 wherein the vent plug is made of a thermoplastic material and the sealing ring is made of a thermoplastic elastomer or rubber.

12. The cover according to any of the claims 5 to 7 wherein the top surface of the vent plug has two different zones, an outer zone and an inner zone, wherein these two zones have different surface properties.

13. The cover according claims 12 wherein one zone is rougher to provide more grip than the other zone.

14. The cover according claims 12 wherein one zone is made of a material which is more tacky than the material of the other zone.

15. A lead acid battery comprising a cover according to any of claims 5 to 14.

## Patentansprüche

1. Prozess zum Versiegeln einer Bleibatterie unter Verwendung eines Verschlussstopfens für eine Füllöffnung in einer Abdeckung für eine Bleibatterie,
• wobei der Verschlussstopfen einen ringförmigen Körper mit einem Kopfabschnitt und einem Körperabschnitt aufweist,
• wobei der Körperabschnitt auf einer Außenfläche des Körperabschnitts zum mechanischen in Eingriff bringen des Verschlussstopfens in die Füllöffnung in der Abdeckung durch Drehung des Stopfens unter Verwendung eines Drehmoments ein Gewinde und einen Dichtungsring aufweist, **dadurch gekennzeichnet, dass**
der Kopfabschnitt des Verschlussstopfens keine Verriegelungsmöglichkeit hat, in die ein Werkzeug mechanisch in Eingriff gebracht werden kann, und
• wobei das Drehmoment, das notwendig ist, um den Verschlussstopfen in die Abdeckung einzubringen, zwischen einem Werkzeug und dem Verschlussstopfen nur durch Reibung übertragen wird.

2. Prozess gemäß Anspruch 1, wobei das Drehmoment im Bereich zwischen 100 N*cm bis 250 N*cm liegt.

3. Prozess gemäß Anspruch 1 oder 2, wobei eine Axialkraft oben auf den Verschlussstopfen aufgebracht wird, und zwar im Bereich von: 250 bis 350 N.

4. Prozess gemäß einem der Ansprüche 1 bis 3, wobei eine Drehgeschwindigkeit zwischen 550 bis 650 U/Min auf den Verschlussstopfen aufgebracht wird.

5. Abdeckung für eine Bleibatterie, umfassend mindestens eine Füllöffnung und mindestens einen gegen unsachgemäße Eingriffe gesicherten Verschlussstopfen,
• wobei der Verschlussstopfen einen ringförmigen Körper mit einem Kopfabschnitt und einem Körperabschnitt aufweist,
• wobei der Körperabschnitt auf einer Außenfläche des Körperabschnitts zum mechanischen in Eingriff bringen des Verschlussstopfens in die Füllöffnung in der Abdeckung durch Drehung unter Verwendung eines Drehmoments ein Gewinde und einen Dichtungsring aufweist, **dadurch gekennzeichnet, dass** der Kopfabschnitt des Verschlussstopfens keine Verriegelungsmöglichkeit hat, in die ein Werkzeug mechanisch in Eingriff gebracht werden kann, und
• wobei das Drehmoment, das notwendig ist, um den Verschlussstopfen in die Abdeckung einzubringen, zwischen einem Werkzeug und dem Verschlussstopfen nur durch Reibung übertragen wird,
• wobei der Kopfabschnitt des Verschlussstopfens eine Oberfläche zum Auf- oder Abschrauben des Verschlussstopfens allein durch Reibung aufweist.

6. Abdeckung gemäß Anspruch 5, wobei ein Spalt von zwischen 0,25 mm und 1 mm zwischen der Abdeckung und dem Kopfabschnitt des Verschlussstopfens vorhanden ist.

7. Abdeckung gemäß einem der Ansprüche 5 bis 6, wobei der Kopfabschnitt des Verschlussstopfens eine obere Oberfläche umfasst, die dafür ausgelegt ist, die Übertragung des erforderlichen Anziehdrehmoments durch Reibung zu ermöglichen, und eine Rauheit zwischen Ra = 0,1 µm und Ra = 30 µm aufweist.

8. Abdeckung gemäß einem der Ansprüche 5 bis 7, wobei die obere Oberfläche des Kopfabschnitts des Verschlussstopfens aus dem gleichen Material gefertigt ist wie der Verschlussstopfen.

9. Abdeckung gemäß einem der Ansprüche 5 bis 7, wobei die obere Oberfläche des Verschlussstopfens entweder vollständig oder teilweise von einem Material bedeckt ist, welches ein anderes Material ist als das Material des Verschlussstopfens.

10. Abdeckung gemäß einem der Ansprüche 5 bis 7, wobei die obere Oberfläche des Kopfabschnitts des Verschlussstopfens von mindestens zwei verschiedenen Materialien bedeckt ist.

11. Abdeckung gemäß einem der Ansprüche 5 bis 7, wobei der Verschlussstopfen aus einem thermoplastischen Material und der Dichtungsring aus einem thermoplastischen Elastomer oder Gummi gefertigt ist.

12. Abdeckung gemäß einem der Ansprüche 5 bis 7, wobei die obere Oberfläche des Verschlussstopfens zwei verschiedene Zonen aufweist, eine äußere Zone und eine innere Zone, wobei diese zwei Zonen verschiedene Oberflächeneigenschaften aufweisen.

13. Abdeckung gemäß Anspruch 12, wobei eine Zone rauer ist, um eine stärkere Griffigkeit bereitzustellen als die andere Zone.

14. Abdeckung gemäß Anspruch 12, wobei eine Zone aus einem Material gefertigt ist, welches klebriger ist als das Material der anderen Zone.

15. Bleibatterie, umfassend eine Abdeckung gemäß einem der Ansprüche 5 bis 14.

## Revendications

1. Procédé d'étanchéisation d'une batterie au plomb-acide utilisant un bouchon d'aération pour un trou de remplissage dans un couvercle pour une batterie au plomb-acide,
• dans lequel ledit bouchon d'aération a un corps annulaire avec une partie de tête et une partie de corps,
• dans lequel ladite partie de corps a un filetage et une bague d'étanchéité sur une surface extérieure de la partie de corps pour un engagement mécanique du bouchon d'aération dans le trou de remplissage dans le couvercle par rotation du bouchon en utilisant un couple
• **caractérisé en ce que** la partie de tête du bouchon d'aération n'a pas de possibilité d'interverrouillage dans laquelle un outil pourrait être engagé mécaniquement et
• dans lequel le couple requis pour insérer le bouchon d'aération dans le couvercle est transmis entre un outil et le bouchon d'aération par frottement uniquement.

2. Procédé selon la revendication 1, dans lequel le couple est dans la plage entre 100 N*cm à 250 N*cm.

3. Procédé selon la revendication 1 ou 2, dans lequel une force axiale est appliquée sur le sommet du bouchon d'aération dans la plage de 250 à 350 N.

4. Procédé selon l'une quelconque des revendications 1 à 3, dans lequel une vitesse de rotation d'entre 550 à 650 tr/min est appliquée au bouchon d'aération.

5. Couvercle pour une batterie au plomb-acide comprenant au moins un trou de remplissage et au moins un bouchon d'aération inviolable,
• dans lequel ledit bouchon d'aération a un corps annulaire avec une partie de tête et une partie de corps,
• dans lequel ladite partie de corps a un filetage et une bague d'étanchéité sur une surface extérieure de la partie de corps pour un engagement mécanique du bouchon d'aération dans le trou de remplissage dans le couvercle par rotation en utilisant un couple
• **caractérisé en ce que** la partie de tête du bouchon d'aération n'a pas de possibilité d'interverrouillage dans laquelle un outil pourrait être engagé mécaniquement et
• dans lequel le couple requis pour insérer le bouchon d'aération dans le couvercle est transmis entre un outil et le bouchon d'aération par frottement uniquement,
• dans lequel la partie de tête du bouchon d'aération a une surface pour visser ou dévisser le bouchon d'aération par frottement uniquement.

6. Couvercle selon la revendication 5 dans lequel il y a un espace entre le couvercle et la partie de tête du bouchon d'aération d'entre 0,25 mm et 1 mm.

7. Couvercle selon l'une quelconque des revendications 5 à 6 dans lequel la partie de tête du bouchon d'aération comprend une surface supérieure qui est configurée pour permettre le transfert par frottement du couple de serrage requis et a une rugosité entre Ra = 0,1 µm et Ra = 30 µm.

8. Couvercle selon l'une quelconque des revendications 5 à 7 dans lequel la surface supérieure de la partie de tête du bouchon d'aération est constituée du même matériau que le bouchon d'aération.

9. Couvercle selon l'une quelconque des revendications 5 à 7 dans lequel la surface supérieure du bouchon d'aération est soit totalement, soit partiellement, recouverte par un matériau qui est différent du matériau du bouchon d'aération.

10. Couvercle selon l'une quelconque des revendications 5 à 7 dans lequel la surface supérieure de la partie de tête du bouchon d'aération est recouverte par au moins deux matériaux différents.

11. Couvercle selon l'une quelconque des revendications 5 à 7 dans lequel le bouchon d'aération est constitué d'un matériau thermoplastique et la bague d'étanchéité est constituée d'un élastomère ou d'un caoutchouc thermoplastique.

12. Couvercle selon l'une quelconque des revendications 5 à 7 dans lequel la surface supérieure du bouchon d'aération a deux zones différentes, une zone extérieure et une zone intérieure, dans lequel ces deux zones ont différentes propriétés de surface.

13. Couvercle selon la revendication 12 dans lequel une zone est plus rugueuse pour offrir plus d'adhérence que l'autre zone.

14. Couvercle selon la revendication 12 dans lequel une zone est constituée d'un matériau qui est plus poisseux que le matériau de l'autre zone.

15. Batterie au plomb-acide comprenant au moins un couvercle selon l'une quelconque des revendications 5 à 14.
